# EUROPEAN PATENT APPLICATION

(11) **EP 2 333 731 A1**
(43) Date of publication of application: **15.06.2011**
(21) Application number: 08792421.3
(22) Date of filing: 12.08.2008
(51) Int. Cl.: G07D 9/00

(54) **VALUABLE MEDIUM MANAGEMENT SYSTEM AND VALUABLE MEDIUM MANAGEMENT METHOD**

(71) Applicant: Glory Ltd., Himeji-shi Hyogo 670-8567 (JP)
(72) Inventor: DOI, Kazuhiro, Himeji-shi Hyogo 670-8567 (JP); NISHIDA, Koichi, Himeji-shi Hyogo 670-8567 (JP)
(74) Representative: Jenkins, Peter David
(86) International application number: PCT/JP2008/064488
(87) International publication number: WO 2010/018625

(57) **Abstract**

A burden of a person in charge is reduced, who uses a valuable media management system including a plurality of valuable media handling machines with different processing functions for valuable media and a control unit provided to correspond to each processing machines. Each control unit has a corresponding machine control function for working a valuable media handling machine that corresponds to the own unit, as well as a non-corresponding machine control function for working a valuable media handling machine that does not correspond to the own unit. One of the corresponding machine control function and the non-corresponding machine control function can be selected.

## Description

### FIELD OF THE INVENTION

The present invention relates to a valuable media management system and a valuable media management method. In particular, the present invention relates to a valuable media management system including a plurality of valuable media management apparatuses each of which is composed of a valuable media handling machine and a control unit that corresponds to the valuable media handling machine, and a valuable media management method in this system. The valuable media handling machine is configured to perform a receiving process of valuable media and a storing process thereof. The control unit has an operation unit to be operated for working the valuable media handling machine.

### BACKGROUND ART

Valuable media management apparatuses have been conventionally installed in backyards of department stores, supermarket stores, and so on. The valuable media management apparatus is configured to recognize and count valuable media such as money or coupons that have been collected from a cash register, and to temporarily store the valuable media.

The valuable media management apparatus of this type is also installed in a backyard of a financial institution such as a bank, and is used to recognize, count and to temporarily store money collected from a teller machine or the like.

As this type of valuable media management apparatus, there is generally known a valuable media management apparatus including: a set of a valuable media handling machine (hereinafter referred to simply as "handling machine") configured to perform a receiving process of valuable media, a recognizing process thereof and a storing process thereof; and a control unit (hereinafter referred to as "terminal") configured to control a behavior of the handling machine based on an operation of a cashier or an accounting staff (hereinafter referred to generically as "person in charge") who performs a depositing operation and the like (see, Patent Document 1, for example).

In a valuable media management system using the valuable media management apparatus including the handling machine and the terminal as a set, valuable media are managed as follows. Namely, a person in charge operates an operation unit of the terminal so as to put valuable media collected from a cash register or the like into the handling machine. After the handling machine has performed a recognition process of the valuable media, a counting process thereof and so on, the valuable media are temporarily stored in the handling machine.

Patent Document 1: JP3330801B

### DISCLOSURE OF THE INVENTION

However, since the aforementioned conventional valuable media management system includes the terminal and the handling machine as a set, in a store where the number of kinds of valuable media to be managed is relatively large, there is a possibility that a burden of a person in charge might increases.

That is to say, in the one valuable media management apparatus, the number of kinds of valuable media capable of being managed is limited. Thus, in a store that manages various kinds of valuable media, it is necessary to install the plurality of valuable media management apparatuses.

For example, in a store that handles currencies of two countries, it is necessary to install two valuable media handling apparatuses, one for managing first currency and the other for managing second currency.

In this case, when both a person in charge for managing the first currency and a person in charge for managing the second currency work in the store, since each person in charge can manage money by operating the valuable media management apparatus for each currency, there is no problem about a burden of each person in charge.

However, when only one person in charge works in the store, or when one of the two persons in charge is absent, one person in charge must operate the two valuable media management apparatuses.

In this case, the one person in charge must operate the terminal of the valuable media management apparatus for the first currency so as to put first currency into the handling machine corresponding to the terminal, and then this person in charge must operate the other terminal of the valuable media management apparatus for the second currency so as to put second currency into the handling machine corresponding to the other terminal. In this manner, there occurs a problem in that the burden of the person in charge increases.

Thus, the present invention has been made in order to solve the above conventional object (problem). The object of the present invention is to provide a valuable media management system and a valuable media management method capable of restraining increase of burden of a person in charge, even when there are provided a plurality of valuable media management apparatuses having different processing functions of valuable media.

In order to solve the aforementioned problem and to achieve the object, the invention according to claim 1 provides a valuable media management system including a plurality of valuable media management apparatuses each including: a valuable media handling machine configured to process valuable media; and a control unit that corresponds to the valuable media handling machine, the control unit having an operation unit configured to be operated for working the valuable media handling machine; wherein: at least one valuable media handling machine among the plurality of valuable media handling machines has a processing function of valuable media that is different from those of the other valuable media handling machines; and each of the control unit has a corresponding machine control function for working the valuable media handling machine that corresponds to the own unit, as well as a non-corresponding machine control function for working another valuable media handling machine other than the valuable media handling machine that corresponds to the own unit, and one of the corresponding machine control function and the non-corresponding machine control function can be selected by operating the operation unit.

In addition, in the invention according to claim 2, when the corresponding machine control function is selected by the operation unit, the control unit transmits a process command to the valuable media handling machine that corresponds to the own unit, such that valuable media are processed by the valuable media handling machine that corresponds to the own unit; and when the non-corresponding machine control function is selected by the operation unit, the control unit transmits a process request to another control unit, such that valuable media are processed by the valuable media handling machine that corresponds to said other control unit.

In addition, in the invention according to claim 3, when the control unit receives the process request transmitted from another control unit, the control unit allows the valuable media handling machine that corresponds to the own unit to be worked by said other control unit that has transmitted the process request.

In addition, in the invention according to claim 4, the respective valuable media handling machines have processing functions for handling different specific kinds of valuable media.

In addition, in the invention according to claim 5, the valuable media handling machine includes: a valuable media receiving unit configured to receive valuable media; a recognition unit configured to recognize the valuable media received by the valuable media receiving unit; and a storing unit configured to store the valuable media recognized by the recognition unit.

In addition, in the invention according to claim 6, each of the valuable media handling machine includes a returning unit configured to, when some valuable medium is judged as valuable medium of a type incapable of being handled based on a recognition result by the recognition unit, return this valuable medium.

In addition, in the invention according to claim 7, the control unit further includes an informing unit configured to inform of another valuable media handling machine capable of handling the valuable media to be returned from the valuable media handling machine that corresponds to the own unit.

In addition, in the invention according to claim 8, the control unit includes a check-up unit configured to check up valuable media information about the valuable media judged to be incapable of being handled based on the recognition result by the recognition unit and then returned, with valuable media information about valuable media that were returned by the returning unit and then stored in the other valuable media handling machine.

In addition, in the invention according to claim 9, the valuable media information is information including an amount and a type of the valuable media received by the valuable media receiving unit.

In addition, in the invention according to claim 10, the valuable media information is information including a total sum or total value of the valuable media received by the valuable media receiving unit.

In addition, the invention according to claim 11 provides a valuable media management method including: controlling a corresponding machine, by means of a control unit that corresponds to a valuable media handling machine configured to process valuable media and controls a behavior of the valuable media handling machine, to process valuable media by the valuable media handling machine that corresponds to the control unit; controlling a non-corresponding machine, by means of the control unit, to process valuable media by another valuable media handling machine having a valuable media processing function that is different from that of the initial valuable media handling machine; and selecting one of the controlling of a corresponding machine and the controlling of a non-corresponding machine by operating an operation unit of the control unit.

According to the present invention, there is provided a valuable media management system including a plurality of valuable media management apparatuses each including: a valuable media handling machine configured to process valuable media; and a control unit that corresponds to the valuable media handling machine, the control unit having an operation unit configured to be operated for working the valuable media handling machine; wherein: at least one valuable media handling machine among the plurality of valuable media handling machines has a processing function of valuable media that is different from those of the other valuable media handling machines; and each of the control unit has a corresponding machine control function for working the valuable media handling machine that corresponds to the own unit, as well as a non-corresponding machine control function for working another valuable media handling machine other than the valuable media handling machine that corresponds to the own unit, and one of the corresponding machine control function and the non-corresponding machine control function can be selected by operating the operation unit. Thus, even when there are provided a plurality of valuable media management apparatuses having different processing functions, the present invention can provide a valuable media management system capable of restraining a burden of a person in charge.

In addition, according to the present invention, when the corresponding machine control function is selected by the operation unit, the control unit transmits a process command to the valuable media handling machine that corresponds to the own unit, such that valuable media are processed by the valuable media handling machine that corresponds to the own unit; and when the non-corresponding machine control function is selected by the operation unit, the control unit transmits a process request to another control unit, such that valuable media are processed by the valuable media handling machine that corresponds to said other control unit. Thus, by operating one control unit, a process request can be transmitted to another control unit. Thus, even when there are provided a plurality of valuable media management apparatuses having different processing functions, the present invention can provide a valuable media management system capable of restraining a burden of a person in charge.

In addition, according to the present invention, when the control unit receives the process request transmitted from another control unit, the control unit allows the valuable media handling machine that corresponds to the own unit to be worked by said other control unit that has transmitted the process request. Thus, by operating one control unit, the valuable media handling machine that corresponds to another control unit can be caused to process valuable media. Therefore, even when there are provided a plurality of valuable media management apparatuses having different processing functions, the present invention can provide a valuable media management system capable of restraining a burden of a person in charge.

In addition, according to the present invention, the respective valuable media handling machines have processing functions for handling different specific kinds of valuable media. Thus, even when there are provided a plurality of valuable media management apparatuses for different kinds of valuable media to be processed, the present invention can provide a valuable media management system capable of restraining a burden of a person in charge.

In addition, according to the present invention, the valuable media handling machine includes: a valuable media receiving unit configured to receive valuable media; a recognition unit configured to recognize the valuable media received by the valuable media receiving unit; and a storing unit configured to store the valuable media recognized by the recognition unit. Thus, by operating one control unit, the valuable media handling machine that corresponds to another control unit can be caused to perform a recognition process and a storing process of different valuable media. Therefore, even when there are provided a plurality of valuable media management apparatuses having different processing functions, the present invention can provide a valuable media management system capable of restraining a burden of a person in charge.

In addition, according to the present invention, each of the valuable media handling machine includes a returning unit configured to, when some valuable medium is judged as valuable medium of a type incapable of being handled based on a recognition result by the recognition unit, return this valuable medium. Thus, it is possible to precisely sort valuable media of different kinds and manage the same.

In addition, according to the present invention, the control unit further includes an informing unit configured to inform of another valuable media handling machine capable of handling the valuable media to be returned from the valuable media handling machine that corresponds to the own unit. Thus, it is easy for a person in charge to know another valuable media handling machine capable of handling the valuable media returned from the valuable media handling machine, whereby a burden of the person in charge can be reduced.

In addition, according to the present invention, the control unit includes a check-up unit configured to check up valuable media information about the valuable media judged to be incapable of being handled based on the recognition result by the recognition unit and then returned, with valuable media information about valuable media that were returned by the returning unit and then stored in the other valuable media handling machine. Thus, it is possible to confirm that the valuable media, which have been judged to be incapable of being handled and returned, are stored in another valuable media handling machine. Therefore, an occurrence rate of losing returned valuable media can be reduced.

In addition, according to the present invention, the valuable media information is information including an amount and a type of the valuable media received by the valuable media receiving unit. Thus, since an amount and a type of valuable media that was returned from one valuable media handling machine can be checked up with an amount and a type of the valuable media that were then stored in another valuable media handling machine, it is possible to follow up whether the returned valuable media are stored in the other valuable media handling machine or not.

In addition, according to the present invention, the valuable media information is information including a total sum or total value of the valuable media received by the valuable media receiving unit. Thus, since a total sum or a total value of the valuable media that were returned from one valuable media handling machine can be checked up with a total sum or a total value of the valuable media that were then stored in another valuable media handling machine, it is possible to follow up whether the returned valuable media are stored in the other valuable media handling machine or not.

In addition, according to the present invention, there is provided a valuable media management method including: controlling a corresponding machine, by means of a control unit that corresponds to a valuable media handling machine configured to process valuable media and controls a behavior of the valuable media handling machine, to process valuable media by the valuable media handling machine that corresponds to the control unit; controlling a non-corresponding machine, by means of the control unit, to process valuable media by another valuable media handling machine having a valuable media processing function that is different from that of the initial valuable media handling machine; and selecting one of the controlling of a corresponding machine and the controlling of a non-corresponding machine by operating an operation unit of the control unit. Thus, even when there are provided a plurality of valuable media management apparatuses, the present invention can provide a valuable media management method capable of restraining a burden of a person in charge.

### BRIEF DESCRIPTION OF THE DRAWINGS

Fig. 1 is an explanatory view showing an overall structure of a valuable media management system in one embodiment.
Fig. 2 is an explanatory view showing structures of a terminal and a depositing and dispensing machine.
Fig. 3 is an explanatory view showing examples of display by the terminal.
Fig. 4 is a flowchart showing processes performed by a main control unit of the terminal.
Fig. 5 is a flowchart showing processes performed by a sub control unit of the depositing and dispensing machine.

- S: valuable media management system
- 1: first system
- 2: first depositing and dispensing machine
- 3: first terminal
- 100: second system
- 102: second depositing and dispensing machine
- 103: second terminal
- 11, 111: displaying and operating unit
- 12: main control unit
- 21: sub control unit

### DETAILED DESCRIPTION OF THE INVENTION

A preferred embodiment of a valuable media management system and a valuable media management method according to the present invention will be described herebelow with reference to the accompanying drawings.

Given herein as an example of a valuable media management system to describe the embodiment is a valuable media management system including: a valuable media management apparatus (hereinafter referred to as "first system") having a valuable media handling machine (hereinafter referred to as "first depositing and dispensing machine") capable of handling only money of a first country (Japan) (first currency) and a control unit (hereinafter referred to as "first terminal") configured to control a behavior of the first depositing and dispensing machine; and a valuable media management apparatus (hereinafter referred to as "second system") having a valuable media handling machine (hereinafter referred to as "second depositing and dispensing machine") capable of handling only money of a second country (US) (second currency) and a control unit (hereinafter referred to as "second terminal") configured to control a behavior of the second depositing and dispensing machine.

In this embodiment, money capable of being handled by each of the handling machines does not mean money capable of being recognized by each handling machine but means money capable of being deposited or dispensed by each depositing and dispensing machine. Namely, the first depositing and dispensing machine in this embodiment is configured to recognize both of the first currency and the second currency, and is configured to deposit or dispense only the first currency. On the other hand, the second depositing and dispensing machine is configured to recognize both of the first currency and the second currency, and is configured to deposit or dispense only the second currency.

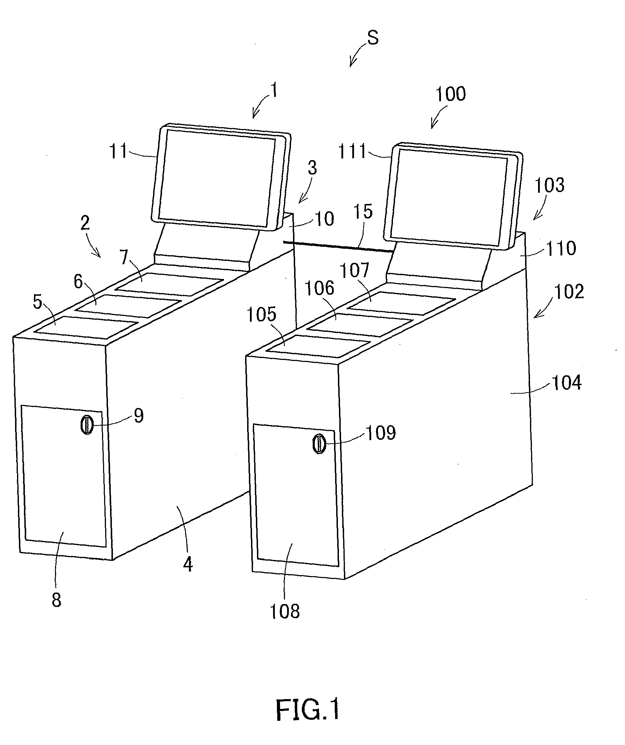

A valuable media management system S shown in Fig. 1 is a system that is installed in a backyard or a cash room of a store where two kinds of currencies, i.e., Japanese yen and US dollar can be used.

The valuable media management system S is used by a register cashier or an accounting staff (hereinafter referred to as "person in charge") who collects sales proceeds from respective cash registers after business hours of the store, and deposits the sales proceeds into the valuable media management system S, so that the sales proceeds are counted by the valuable media management system S and temporarily stored therein. In addition, the valuable media management system S is configured to dispense money, when money is needed such as when small change in the cash registers falls short.

As shown in Fig. 1, the valuable media management system S includes two valuable media management apparatuses, i.e., a first system 1 and a second system 100.

The first system 1 includes a first depositing and dispensing machine 2 capable of handling only the first currency, and a first terminal 3 that corresponds to the first depositing and dispensing machine 2 and is configured to control a behavior of the first depositing and dispensing machine 2. On the other hand, the second system 100 includes a first depositing and dispensing machine 102 capable of handling only the second currency, and a second terminal 103 that corresponds to the second depositing and dispensing machine 102 and is configured to control a behavior of the second depositing and dispensing machine 102.

Namely, the valuable media management system S in this embodiment includes the first depositing and dispensing machine 2 and the second depositing and dispensing machine 102 which have the money handling functions different from each other.

The first depositing and dispensing machine 2 includes a box-like housing 4. An inlet 5 for banknotes, an outlet 6 for banknotes and a return slot 7 for banknotes are provided, in this order from the front side, in an upper surface of the box-like housing 4. In addition, a door 8 is provided on a front side surface of the housing 4. The door 8 is opened and closed when money is collected from the first depositing and dispensing machine 2, and when money is replenished to the first depositing and dispensing machine 2. In Fig. 1, the reference number 9 depicts a keyhole by which the door 8 is locked and unlocked.

Similarly to the first depositing and dispensing machine 2, the second depositing and dispensing machine 102 includes a box-like housing 104. An inlet 105 for banknotes, an outlet 106 for banknotes and a return slot 107 for banknotes are provided, in this order from the front side, in an upper surface of the box-like housing 104. In addition, a door 108 is provided on a front side surface of the housing 104. The door 108 is opened and closed when money is collected from the second depositing and dispensing machine 102, and when money is replenished to the second depositing and dispensing machine 102. In Fig. 1, the reference number 109 depicts a keyhole by which the door 108 is locked and unlocked.

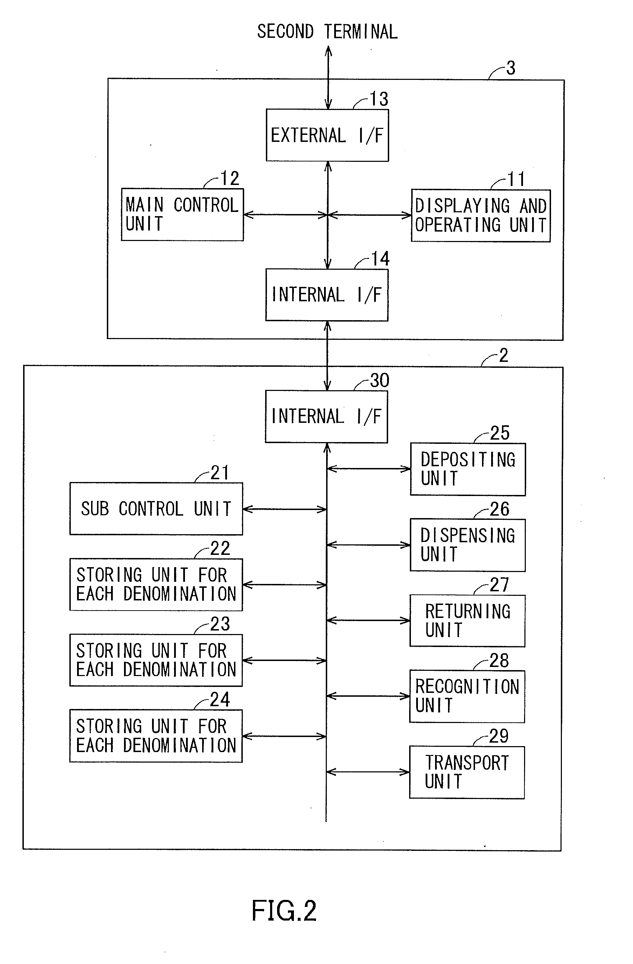

Inside each of the housings 4 and 104 of these first depositing and dispensing machine 2 and the second depositing and dispensing machine 102, there are respectively accommodated a sub control unit 21, storing units for each denomination 22 to 24, a depositing unit 25, a dispensing unit 26, a returning unit 27, a recognition unit 28, a transport unit 29, and an internal I/F (interface) 30 (see, Fig. 2), which will be described herebelow.

The first terminal 3 includes a body 10 accommodating a main control unit 12 (see, Fig. 2), which will be described below, and a displaying and operating unit 11 of a touch-panel type. The displaying and operating unit 11 is configured to display images of various information about the first system 1, and to allow the first depositing and dispensing machine 2 to perform various operations such as a depositing process, a dispensing process and so on, when a predetermined position on an image is touched by a finger.

Similarly to the first terminal 3, the second terminal 103 includes a body 110 and a displaying and operating unit 111.

In the valuable media management system S in this embodiment, the first terminal 3 and the second terminal 103 are connected to each other through a communication cable 15, so that various information can be transmitted between the first terminal 3 and the second terminal 103.

With reference to Fig. 2, the structures of the first terminal 3 and the first depositing and dispensing machine 2 are described. Fig. 2 is a function block view showing the structures of the first terminal 3 and the first depositing and dispensing machine 2. Since the structure of the first terminal 3 and that of the second terminal 103 are substantially the same with each other, and the structure of the first depositing and dispensing machine 2 and that of the second depositing and dispensing machine 102 are substantially the same with each other, detailed description of the second terminal 103 and the second depositing and dispensing machine 102 is omitted.

As shown in Fig. 2, the first depositing and dispensing machine 2 in this embodiment includes: the depositing unit 25 configured to take money deposited by a person in charge from the inlet 5 to the inside; the dispensing unit 26 configured to feed out money from the inside to the outlet 6; the returning unit 27 configured to return the money, once taken to the inside, through the return slot 7; the recognition unit 28 configured to recognize a kind of received money; the transport unit 29 configured to transport the money inside the first depositing and dispensing machine 2; the storing units for each denomination 22 to 24 configured to store money by denomination; the internal I/F 30 configured to send and receive various information to and from the first terminal 3; and the sub control unit 21 configured to control behaviors of the depositing unit 25, the dispensing unit 26, the returning unit 27, the recognition unit 28, the transport unit 29, the internal I/F 30, and the storing units for each denomination 22 to 24.

The depositing unit 25 functions as a valuable media receiving unit for receiving valuable media, based on a process command transmitted through the below-described internal I/F 30. The depositing unit 25 includes a pair of belts configured to sandwich money one by one from above and below, and a drive unit for driving the belts, the drive unit having pulleys and a motor. The depositing unit 25 is configured to take a plurality of money which have been collectively supplied into the inlet, to the inside one by one.

Similarly to the depositing unit 25, each of the dispensing unit 26 and the returning unit 27 includes a pair of belts and a drive unit for driving the belts, the drive unit having pulleys and a motor. The dispensing unit 26 is configured to feed out money one by one, which have been transported from the inside, to the outlet 6. The returning unit 27 is configured to return money one by one, which have been transported from the inside, through the return slot 7.

The recognition unit 28 functions as a recognition unit for recognizing valuable media received by the valuable media receiving unit. The recognition unit 28 is configured to recognize a kind of money deposited from outside.

To be specific, the recognition unit 28 includes an imaging unit configured to image money transported from the depositing unit. Based on an image of the money imaged by the imaging unit, the recognition unit 28 recognizes a kind of the money. Then, the recognition unit 28 transmits the recognition information to the sub control unit 21. Based on the recognition information transmitted from the recognition unit 28, the sub control unit 21 judges whether the money that has been recognized by the recognition unit 28 is first currency or not. When the money is judged as first currency, the sub control unit 21 further judges whether the money is a fit note or an unfit note, and judges whether the money is a 10,000-yen note, a 5,000-yen note or a 1,000-yen note. The sub control unit 21 further judges authenticity of the money. Thereafter, the sub control unit 21 counts the number of the judged money for each denomination and a total sum thereof. In addition, when money that has been transported from the depositing unit is recognized as second currency, authenticity, fitness and denomination of the money are recognized.

When valuable media are recognized as valuable media incapable of being handled based on a recognition result of the recognition unit, the returning unit 27 functions as a returning unit for returning the recognized valuable media. In this embodiment, when second currency is mixed in deposited money, the recognition unit 28 is configured to recognize the second currency, and to transmit the recognition information to the sub control unit 21. Then, when the money is judged as money incapable of being handled or money that is other than the money capable of being handled, the returning unit 27 returns the second currency. The above process may be performed not by the sub control unit 21 but by the main control unit 12. Regarding the second currency to be returned at this time, the main control unit 12 allows a predetermined storage unit (described below) to store the number thereof for each denomination and a total sum thereof as valuable media information.

The storing units for each denomination 22 to 24 function as storing units for storing valuable media recognized by the recognition unit. The storing units for each denomination 22 to 24 are formed of detachable stackers for storing money that have been recognized by the recognition unit 28 for each denomination (specifically, 10,000-yen note, 5,000-yen note and 1,000-yen note).

The transport unit 29 is configured to transport money from the depositing unit 25 to the storing units for each denomination 22 to 24 via the recognition unit 28; from the storing units for each denomination 22 to 24 to the dispensing unit 26 via the recognition unit 28; and from the depositing unit 25 to the returning unit 27 via the recognition unit 28.

The transport unit 29 includes a pair of transport belts extended between the respective units (depositing unit 25, dispensing unit 26, returning unit 27 and recognition unit 28) over a plurality of rollers, and a drive unit for driving the transfer belts. By driving the transfer belts with money being sandwiched one by one between the pair of transfer belts, the money can be transported one by one.

The sub control unit 21 includes a CPU (Central Processing Unit), a ROM (Read-Only Memory) and a RAM (Random Access Memory). When the CPU reads out various information processing programs for handling money, which are recorded in the ROM, and execute the same, based on various process commands transmitted from the below-described main control unit 12, the sub control unit 21 controls behaviors of the depositing unit 25, the dispensing unit 26, the returning unit 27, the recognition unit 28 and transport unit 29 so as to perform the money depositing process, the money dispensing process, the money returning process and so on. The RAM functions as a temporal storage area that is used as a working area when the CPU executes the various information processing programs recorded in the ROM.

The reference number 30 in Fig. 2 depicts the internal I/F configured to send and receive various information including a process command, a deposit and dispense report, a return report and so on, to and from the first terminal 3.

The sub control unit 21, the internal I/F 30, the depositing unit 25, the dispensing unit 26, the returning unit 27, the recognition unit 28, the transport unit 29, and the storing units for each denomination 22 to 24 are connected to each other through an information communication bus.

Next, the structure of the first terminal 3 is described. The first terminal 3 includes an external I/F 13, which is configured to send and receive various information to and from the second terminal 103, an internal I/F 14, which is configured to send and receive various information to and from the first depositing and dispensing machine 2, the displaying and operating unit 11 of a touch-panel type, and the main control unit 12 configured to control the behavior of the first system 1 as a whole.

The main control unit 12 includes a CPU, a ROM and a RAM. The ROM records various information processing programs to be executed by the CPU, and various images to be displayed on the displaying and operating unit 11.

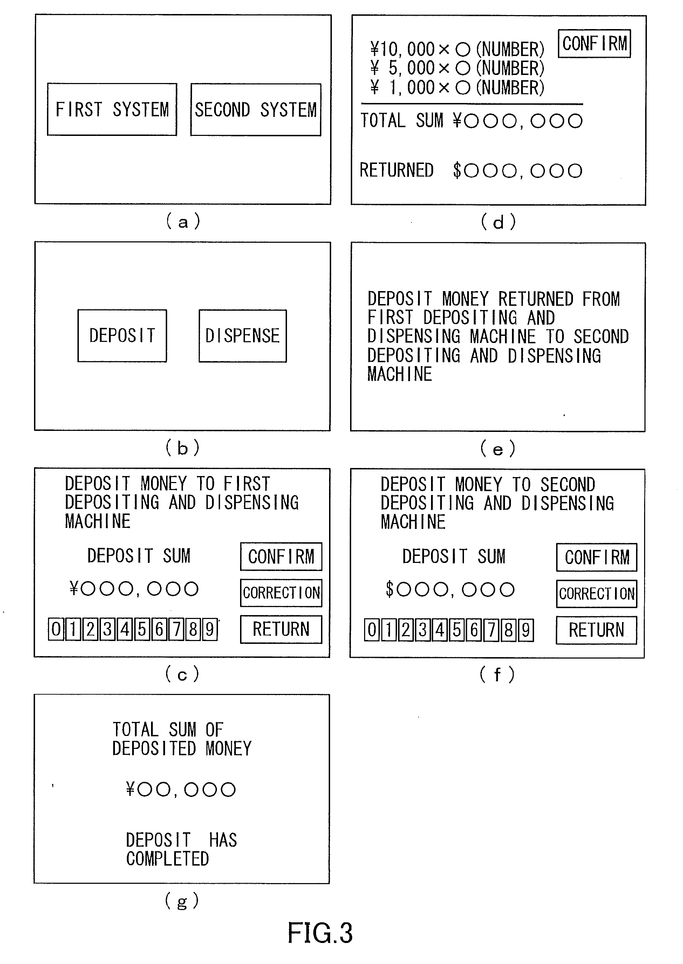

To be specific, the ROM records the various information processing programs to be executed by the CPU for transmitting various process commands, which include a money deposit start command and a money dispense start command, to the first depositing and dispensing machine 2, based on the operation of the displaying and operating unit 11, and information such as various guide display images (see, Fig. 3) for guiding a person in charge regarding an operation of the first terminal 3.

Based on an operation of the displaying and operating unit 11 by a person in charge, the main control unit 12 reads out the various information processing programs recorded in the ROM so as to execute the programs while using the RAM as a working area, so that control of the first system 1 as a whole, such as control of the behavior of the first depositing and dispensing machine 2 and control of the display of the displaying and operating unit 11, is performed.

The main control unit 12, the displaying and operating unit 11, the external I/F 13, the internal I/F 14 are connected to each other through a communication bus.

In particular, the first terminal 3 has a corresponding machine control function for working the first depositing and dispensing machine 2 that corresponds to the own unit (first terminal 3), as well as a non-corresponding machine control function for working the second depositing and dispensing machine 102 which is not the first depositing and dispensing machine 2 that corresponds to the own unit.

By operating the display and operating unit 11, a person in charge can select one of the corresponding machine control function and the non-corresponding machine control function of the first terminal 3.

That is to say, in the valuable media management system S in this embodiment, one person in charge can deposit first currency to the first depositing and dispensing machine 2, and can deposit second currency to the second depositing and dispensing machine 102, only by operating the displaying and operating unit 11 of the first terminal 3, without operating the displaying and operating unit 111 of the second terminal 103.

Thus, in addition to the aforementioned various information processing programs and the information about display images, the ROM of the main control unit 12 records: image information to be displayed on the displaying and operating unit 11, by which any one of the first system 1 and the second system 100 can be selected by a person in charge; an information processing program to be executed by the CPU for transmitting a process request to the second terminal 103 so as to make the second depositing and dispensing machine 102 process money, when the second system 100 is selected and the displaying and operating unit 11 is operated; and an information processing program to be executed by the CPU for receiving a process request from the second terminal 103 and for forwarding the process request as a process command to the first depositing and dispensing machine 2.

In addition, the ROM of the main control unit 12 records: image information for informing a person in charge of another depositing and dispensing machine (herein, the second depositing and dispensing machine 102) capable of handling money (herein, second currency) returned by the returning unit 27 of the first depositing and dispensing machine 2; an information processing program to be executed by the CPU for transmitting, to the second depositing and dispensing machine 102 capable of handling the returned second currency, a process request requesting a reception of the second currency; an information processing program to be executed by the PCU for receiving a process request requesting a reception of first currency from the second system 100; and an information processing program to be executed by the CPU for forwarding the received process request as a process command to the first depositing and dispensing machine 2.

Further, the ROM of the main control unit 12 records a program to be executed by the CPU for obtaining valuable media information, which includes a denomination of the money to be returned by the returning unit 27 (herein, the second currency), the number of the money for each denomination, and a total sum thereof, and for causing the RAM to record the valuable media information; and a program to be executed by the CPU for receiving, from another depositing and dispensing machine (herein, the second depositing and dispensing machine 102) that succeedingly stores money that has been judged as money of a kind incapable of being handled (money of a kind that cannot be deposited or dispensed), valuable media information about the money stored therein, and for checking up the received valuable media information with the valuable media information about the money returned from the own machine (first depositing and dispensing machine 2), recorded in the RAM.

In this embodiment, when the aforementioned various kinds of information processing programs are executed by the CPU, based on the operation of the operation unit, the main control unit 12 serves as: a process command transmitting unit for transmitting a process command of valuable media to the valuable media handling machine that corresponds to the own unit, to process valuable media; a process request transmitting unit for transmitting, to another control unit, a process request requesting the valuable media handling machine, which corresponds to the other control unit, to process valuable media, when the non-corresponding machine control function is selected and the operation unit is operated; a process request receiving unit for receiving a process request transmitted from the other control unit; a process request forwarding unit for forwarding, as a process command, a process request, which has been received by the process request receiving unit, to the valuable media handling machine that corresponds to the own unit; a reception command transmitting unit for transmitting, to the control unit that corresponds to another valuable media handling machine capable of handling valuable media returned from the valuable media handling machine that corresponds to the own unit, a process request requesting a reception of the returned valuable media; a reception command receiving unit for receiving a process request requesting a reception of valuable media from another control unit; and a reception command forwarding unit for forwarding, as a process command, a process request requesting reception of valuable media, which has been received by the reception command receiving means, to the valuable media handling machine that corresponds to the own unit.

When the main control unit 12 in this embodiment judges that received money is money incapable of being handled or money other than the money capable of being handled, the main control unit 12 reads out a predetermined information processing program from the ROM and executes the program. At this time, the main control unit 12 serves as a checking unit for checking up valuable media information about valuable media which have been recognized to be incapable of being handled by predetermined information previously set in the sub control unit 21 based on a recognition result by the recognition unit, and are to be returned by the returning unit, with variable media information about valuable media that were returned by the returning unit and stored in another variable media handling machine. Although the above information is judged by the sub control unit 21, the information may be judged by the main control unit.

Next, a series of flow of a depositing operation performed by a person in charge with the use of the first system 1 of the valuable media management system S as structured above is described with reference to Fig. 3. Fig. 3 is an explanatory view showing image examples displayed on the displaying and operating unit 11 of the first terminal 3 in the course of the depositing operation.

When a person in charge deposits money, as shown in Fig. 3(a), the displaying and operating unit 11 of the first terminal 3 displays an image by which the person in charge can select one of the first system 1 and the second system 100.

Then, when first currency is deposited, the person in charge touches a portion on which characters of "First System" are displayed in the image so as to select the first system 1 for first currency. On the other hand, when second currency is deposited, the person in charge touches a portion on which characters of "Second System" are displayed in the image so as to select the second system 100 for second currency.

As shown in Fig. 3(b), when the person in charge selects the first system 1 or the second system 100, the displaying and operating unit 11 displays an image by which the person in charge can select one of the depositing process and the dispensing process.

In order to perform the depositing operation, the person in charge touches a portion on which characters "Deposit" are displayed in the image so as to select the depositing process.

As shown in Fig. 3(c), when the first system 1 is selected by the person in charge, the displaying and operating unit 11 displays a deposit guide display image that leads the person in charge to deposit money to the first depositing and dispensing machine 2. On the other hand, as shown in Fig. 3(f), when the second system 100 is selected by the person in charge, the displaying and operating unit 11 displays a deposit guide display image that leads the person in charge to deposit money to the second depositing and dispensing machine 102.

Then, the person in charge puts money into the depositing and dispensing machine (the first depositing and dispensing machine 2 or the second depositing and dispensing machine 102) guided by the guide display image, and inputs a sum of money to be deposited at this time by touching portions on which numeric characters 0 to 9 are displayed in the guide display image. Thereafter, the person in charge touches a portion on which the characters of "Confirm" are displayed in the guide display image, the depositing process is started in the depositing and dispensing machine (the first depositing and dispensing machine 2 or the second depositing and dispensing machine 102) into which the money have been put.

That is to say, in a case where the first system 1 is selected by the person in charge, when the person in charge operates the displaying and operating unit 11 of the first terminal 3 so as to start the depositing process, the first terminal 3 transmits, to the first depositing and dispensing machine 2, a process command of the depositing process. Then, the first depositing and dispensing machine 2 performs the money receiving process, the money recognition and judgment process including the counting process, and the money storing process.

On the other hand, in a case where the second system 100 is selected by the person in charge, when the person in charge operates the displaying and operating unit 11 of the first terminal 3 so as to start the depositing process, the first terminal 3 transmits, to the second terminal 103, a process request requesting start of the depositing process. Then, the second terminal 103 having received the process request transmits, to the second depositing and dispensing machine 102, a process command commanding the start of the depositing process.

Then, the second depositing and dispensing machine 102 having received the process command performs the money receiving process of the money putted thereinto, the money recognition and judgment process including the counting process, and the money storing process.

Thereafter, when the counting result by the depositing and dispensing machine (the first depositing and dispensing machine 2 or the second depositing and dispensing machine 102) and the deposit sum inputted by the person in charge correspond to each other, the displaying and operating unit 11 displays an image showing the sum of the deposited money and completion of the deposit (for example, when the first currency are deposited, see, Fig. 3(g)).

In this manner, in the valuable media management system S in this embodiment, by operating the displaying and operating unit 11 of one terminal, money can be deposited to two depositing and dispensing machines (the first depositing and dispensing machine 2 or the second depositing and dispensing machine 102) capable of handling different kinds of money. Thus, when a person in charge deposits both of first currency and second currency, it is not necessary to operate both of the first terminal 3 and the second terminal 103, whereby a burden of the person in charge can be reduced.

Further, since the displaying and operating unit 11 is configured to display the image for guiding the depositing and dispensing machine to which money should be deposited, an operation for searching the depositing and dispensing machine to which money should be deposited can be omitted, whereby a burden of the person in charge can be also reduced.

In addition, in the valuable media management system S in this embodiment, even when second currency is mixed in money that have been deposited to the first depositing and dispensing machine 2 by error, the first currency and the second currency can be easily sorted from each other, and the first currency and the second currency can be deposited to the depositing and dispensing machines capable of handling respective kinds of money.

Next, there is described a flow of the depositing operation when first currency, in which second currency is mixed, are put into the first depositing and dispensing machine 2.

Since the operations of the displaying and operating unit 11 by a person in charge and the display images of the displaying and operating unit 11 until money are put into the first depositing and dispensing machine 2 are the same as the above depositing operation, description thereof is omitted, and a flow of the operations after the money recognition and judgment process is described.

In the first depositing and dispensing machine 2, as shown in Fig. 3 (d), when it is found that, based on the result of the recognition and judgment process, second currency is mixed in the money putted into the first depositing and dispensing machine 2, the displaying and dispensing unit 11 displays an image showing the number of the first currency for each denomination, which have been put thereinto at this time, a total sum thereof, a sum of the second currency mixed in the put money, and a notice of returning the second currency. Then, the second currency mixed in the first currency is returned through the return slot 7. At this time, valuable media information including a denomination of the returned second currency, the number thereof for each denomination and a total sum thereof is recorded in the RAM in the main control unit 12.

Thereafter, as shown in Fig. 3 (e), the displaying and operating unit 11 displays an image informing another depositing and dispensing machine (second depositing and dispensing machine 102) capable of handling second currency, i.e., an image showing "Deposit Returned Money from First Depositing and Dispensing Machine to Second Depositing and Dispensing Machine".

Then, when the returned second currency is taken out from the first depositing and dispensing machine 2 by the person in charge, the first terminal 3 transmits, to the second terminal 103, a process request requesting reception of the second currency. Then, the second terminal 103 having received the process request transmits the process request as a process command to the second depositing and dispensing machine 102.

After that, when the person in charge puts the second currency returned from the first depositing and dispensing machine 2 into the second depositing and dispensing machine 102, the second depositing and dispensing machine 102 performs the depositing process of the second currency. At this time, when the second currency returned from the first depositing and dispensing machine 2 is stored in the second depositing and dispensing machine 102, the second terminal 103 transmits, to the first terminal 3, valuable media information including a denomination of the stored second currency, the number thereof for each denomination and a total sum thereof.

Then, when the first terminal 3 receives the valuable media information from the second terminal 103, the first terminal 3 checks up the valuable media information that has been recorded in the RAM inside the main control unit 12 when the second currency was returned, with the valuable media information transmitted from the second terminal 103. The check-up result is recorded and managed in the RAM inside the main control unit 12.

In this manner, in the valuable media management system S in this embodiment, even when second currency is mixed in first currency putted into the first depositing and dispensing machine 2, the second currency mixed therein can be returned, and a person in charge can be informed of the second depositing and dispensing machine 102 to which the second currency should be deposited by means of the displaying and operating unit 11. Thus, following the information, the person in charge can easily deposit the second currency to the second depositing and dispensing machine 102.

Therefore, according to the valuable media management system S, even when money collected from a cash register for first currency together with money collected from a cash register for second currency are put into one of the depositing and dispensing machines, the first currency and the second currency can be easily, precisely sorted from each other, whereby a person in charge can deposit the money to the first depositing and dispensing machine 2 and the second depositing and dispensing machine 102. As a result, it is not necessary to allocate two persons in charge to respective first currency and second currency, whereby labor costs can be reduced.

Further, in the valuable media management system S, as described above, when one depositing and dispensing machine judges that money received by the machine is money of a kind incapable of being handled, and returns the money, valuable media information about the money is temporarily stored. When valuable media information about the returned money is sent from another depositing and dispensing machine that stores the returned money, the received valuable media information and the valuable media information temporarily stored in the own machine, which was stored when the money was returned, are checked up with each other.

Thus, according to the valuable media management system S, it is possible to confirm that the money, which was judged to be incapable of being handled by one depositing and dispensing machine and returned therefrom, is stored in another depositing and dispensing machine. Thus, an occurrence rate of losing returned money can be reduced.

Further, since each of the valuable media information to be checked up includes a kind, an amount and a total sum or total value of the money, it is possible to check up the kind, the amount and the total sum or total value of the money which was returned from one depositing and dispensing machine, with the kind, the amount and the total sum or total value of the money which was stored in another depositing and dispensing machine. Thus, it is possible to confirm that the returned money is stored in another depositing and dispensing machine with the use of the amount, the kinds, the total sum and the total value included in the valuable media information to be checked up with. As a result, it is possible to follow up to which machine the returned money is stored.

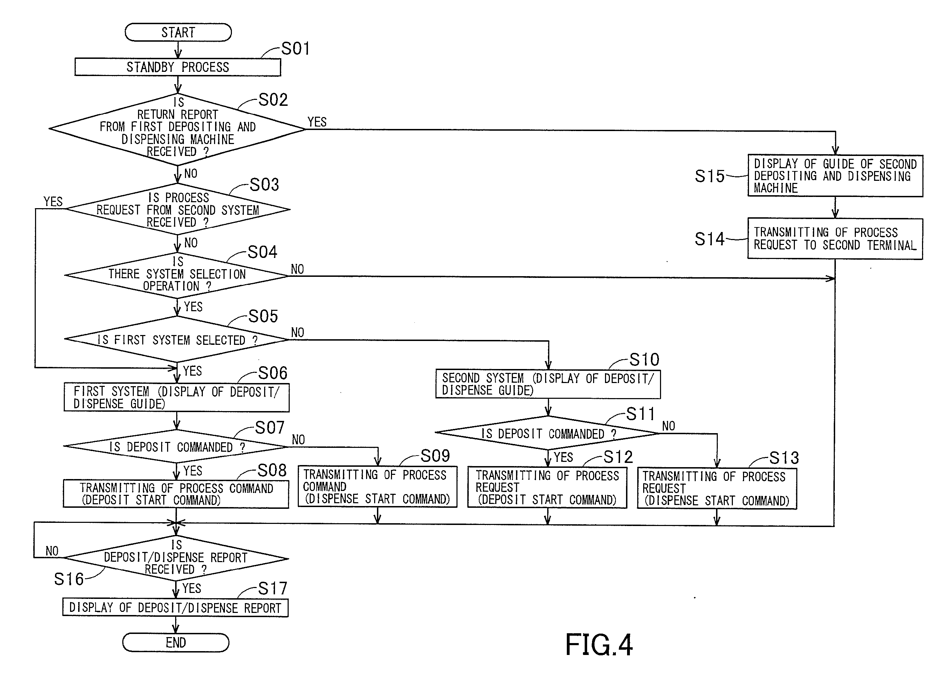

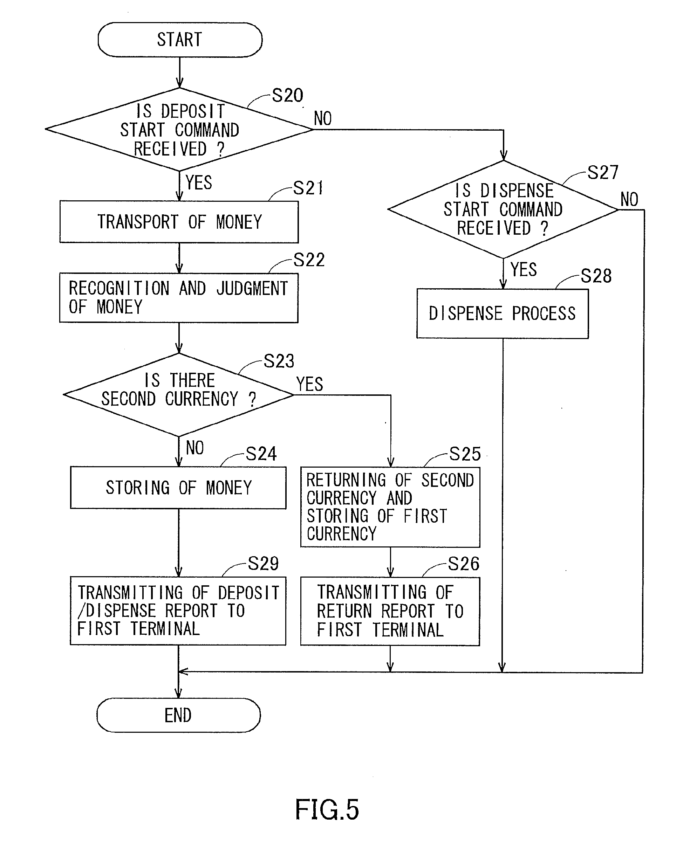

Next, processes performed in the first system 1 when the aforementioned series of operations are performed are described with reference to Figs. 4 and 5.

At first, processes performed by the main control unit 12 of the first terminal 3 are described with reference to a flowchart shown in Fig. 4. Herein, processes performed by the main control unit 12 of the first terminal 3 are described. The main control unit of the second terminal 103 performs processes shown in the flowchart of Fig. 4 in which the "first system" and the "second system" are replaced with each other, and the processes of the main control unit of the second terminal 103 are substantially the same as those performed by the main control unit 12 of the first terminal 3. Thus, description of the processes performed by the main control unit of the second terminal 103 is omitted.

Fig. 4 is the flowchart showing the processes performed by the main control unit 12. While electric power is being supplied to the valuable media management system S, the main control unit 12 repeatedly performs the series of processes shown in the flowchart of Fig. 4.

When electric power is supplied to the valuable media management system S, the main control unit 12 of the first terminal 3 (hereinafter referred to simply as "main control unit 12") firstly performs a standby process (step S01). In the standby process, the main control unit 12 causes the displaying and operating unit 11 to display, as a standby image, the image by which one of the first system 1 and the second system 100 can be selected by a person in charge (see, Fig. 3(a)). Then, the main control unit 12 advances the process to a step S02.

Then, in the step S02, the main control unit 12 judges whether a return report indicating that money incapable of being handled was returned from the first depositing and dispensing machine 2 has been received or not.

In the step S02, when the main control unit 12 judges that the return report has been received (step S02: Yes), the main control unit 12 advances the process to a step S15. At this time, the main control unit 12 causes the inside RAM to temporarily store valuable media information including a denomination of the second currency having been returned from the first depositing and dispensing machine 2, the number thereof for each denomination and a total sum thereof.

In the step S15, the main control unit 12 causes the displaying and operating unit 11 to display the image (see, Fig. 3(d)) showing the total sum of the second currency having been returned from the first depositing and dispensing machine 2. At this time, the displaying and operating unit 11 may display the number of the returned second currency for each denomination that is recorded in the RAM, in addition to the total sum of the returned second currency.

Upon detection that the person in charge has touched the "Confirmation" in the image, the main control unit 12 causes the displaying and operating unit 11 to display the guide display of the second depositing and dispensing machine (see, Fig. 3(e)) which leads the person in charge to deposit the money (second currency) having been returned from the first depositing and dispensing machine 2 to the second depositing and dispensing machine 102 (step S15). Then, the main control unit 12 advances the process to a step S14.

Then, in the step S14, the main control unit 12 transmits a process request requesting reception of the retuned money to the second system 100 (second terminal 103), and advances the process to a step S16.

On the other hand, in the step S02, when the main control unit 12 judges that it does not receive a return report (step S02: No), the main control unit 12 advances the process to a step S03.

Then, in the step S03, the main control unit 12 judges whether a process request from the second system 100 has been received or not. When the main control unit 12 judges that a process request has been received (step S03: Yes), the control unit 12 advances the process to a step S06. Meanwhile, when the main control unit 12 judges that it does not receive a process request (step S03: No), the main control unit 12 advances the process to a step S04.

In the step S04, the main control unit 12 judges whether the person in charge has selected one of the systems by touching the standby image (see, Fig. 3(a)) displayed on the displaying and operating unit 11. When the control unit 12 judges that the person in charge does not select one of the systems (step S04: No), the main control unit 12 advances the process to the step S16. Meanwhile, when the control unit 12 judges that the person in charge has selected one of the systems (step S04: Yes), the main control unit 12 advances the process to a step S05.

Then, in the step S05, the main control unit 12 judges whether the operation performed by the person in charge in the step S04 is an operation for selecting the first system 1 or not. When the main control unit 12 judges that the operation is the operation for selecting the first system 1 (step S05: Yes), the main control unit 12 advances the process to the step S06. Meanwhile, when the main control unit 12 judges that the operation is not the operation for selecting the first system 1, i.e., the operation is an operation for selecting the second system 100 (step S05: No), the main control unit 12 advances the process to a step S10.

In the step S06, the main control unit 12 causes the displaying and operating unit 11 to display the deposit/dispense guide image of the first system 1 (see, Fig. 3(b)), and then advances the process to a step S07.

In the step S10, the main control unit 12 causes the displaying and operating unit 11 to display the deposit/dispense guide image of the second system 100 (see, Fig. 3(b)), and then advances the process to a step S11.

In the step S07, the main control unit 12 judges whether the person in charge has operated the displaying and operating unit 11 so as to input a deposit command to the first system 1 or not . Upon detection that the person in charge has touched the "Deposit" in the deposit/dispense guide image of the first system 1, the main control unit 12 judges that the person in charge has inputted the deposition command (step S07: Yes), and advances the process to a step S08. At this time, the main control unit 12 causes the displaying and operating unit 11 to display the guide image (see, Fig. 3(c)) by which a deposit sum of money to be deposited to the first depositing and dispensing machine 2 can be inputted by the person in charge.

On the other hand, in the step S07, upon detection that the person in charge has touched the "Dispense" in the deposit/dispense guide image of the first system 1 (step S07: No), the main control unit 12 judges that the person in charge has inputted the dispense command, and advances the process to a step S09. At this time, the main control unit 12 causes the displaying and operating unit 11 to display a guide image (not shown) by which a dispense sum of money to be dispensed from the first depositing and dispensing machine 2 can be inputted by the person in charge.

In the step S08, the main control unit 12 transmits a process command including a deposit start command to the first depositing and dispensing machine 2, and then advances the process to a step S16. On the other hand, in the step S09, the main control unit 12 transmits a process command including a dispense start command to the first depositing and dispensing machine 2, and then advances the process to the step S16.

In the step S11, the min control unit 12 judges whether the person in charge has operated the displaying and operating unit 11 so as to input a deposit command to the second system 100. Upon detection that the person in charge has touched "Deposit" in the deposit/dispense guide image of the second system 100, the main control unit 12 judges that the person in charge has inputted the deposition command (step S11: Yes), and advances the process to a step S12. A this time, the main control unit 12 causes the displaying and operating unit 11 to display the guide image (see, Fig. 3(f)) by which a deposit sum of money to be deposited to the second depositing and dispensing machine 102 can be inputted by the person in charge.

On the other hand, in the step S11, upon detection that the person in charge has touched the "Dispense" in the deposit/dispense guide image of the second system 100 (step S11: No), the main control unit 12 advances the process to a step S13. At this time, the main control unit 12 causes the displaying and operating unit 11 to display the guide image by which a dispense sum of money to be dispensed from the second depositing and dispensing machine 102 can be inputted by the person in charge.

In the step S12, the main control unit 12 transmits a process command including a deposit start command to the second system 100 (second terminal 103), and then advances the process to the step S16. On the other hand, in the step S13, the main control unit 12 transmits a process command including a dispense start command to the second system (second terminal 103), and then advances the process to the step S16.

Then, in the step S16, the main control unit 12 judges whether a deposit/dispense report from the first depositing and dispensing machine 2 or the second depositing and dispensing machine 102 has been received or not. When the main control unit 12 judges that a deposit/dispense report is not received, the main control unit 12 repeats the judgment process in the step S16 until a deposit/dispense report is received.

On the other hand, in the step S16, when the main control unit 12 judges that a deposit/dispense report has been received (step S16: Yes), the main control unit 12 advances the process to a step S17.

Then, in the step S17, the main control unit 12 causes the displaying and operating unit 11 to display an image showing the contents of the deposit/dispense report transmitted from the first depositing and dispensing machine 2 or the second depositing and dispensing machine 102 (for example, when the transmitted deposit/dispense report is a deposit report transmitted from the first depositing and dispensing machine 2, the image shown in Fig. 3(g)). Then, the main control unit 12 causes the inside storage unit to record the contents, and finishes the process.

In the step S17, when the deposit report transmitted from the second depositing and dispensing machine 102 via the second terminal includes valuable media information including the number of the second currency for each denomination, which was returned from the first depositing and dispensing machine, and a total sum thereof, the main control unit 12 checks up the valuable media information about the returned second currency recorded in the RAM, with the valuable media information included in the deposit report transmitted from the second depositing and dispensing machine 102. Then, the main control unit 12 causes the inside RAM to record the check-up result, and manages the same.

Although not shown, in the step S17, when the deposit information transmitted from the first depositing and dispensing machine 2 includes valuable media information including the number of first currency for each denomination, which was returned from the second deposit and dispensing machine 102, and a total sum thereof, the main control unit 12 transmits the deposit report including the above valuable media information to the second terminal 103.

Next, processes performed by the sub control unit 21 that controls the first depositing and dispensing machine 2 of the first system 1 are described with reference to Fig. 5. Fig. 5 is a flowchart showing the processes performed by the sub control unit 21 of the first depositing and dispensing machine 2. While electric power is being supplied to the valuable media management system S, the sub control unit 21 repeatedly performs the series of processes shown in the flowchart of Fig. 5.

Herein, only the processes performed by the sub control unit 21 of the first depositing and dispensing machine 2 are described. The sub control unit of the second depositing and dispensing machine 102 performs processes shown in the flowchart of Fig. 5 in which the "first currency" and the "second currency" are replaced with each other and the "first terminal" and the "second terminal" are replaced with each other, and the processes of the sub control unit of the second terminal 103 are substantially the same as those performed by the sub control unit 21 of the first depositing and dispensing machine 2. Thus, description of the sub control unit of the second terminal 103 is omitted.

The sub control unit 21 of the first depositing and dispensing machine 2 (hereinafter referred to simply as "sub control unit 21") judges whether a process command including a deposit start command or a process request including the same from the first terminal 3 has been received or not (step S20). When the sub control unit 21 judges that a process command including a deposit start command or a process request including the same has been received (step S20: Yes), the sub control unit 21 advances the process to a step S21. Meanwhile, when the sub control unit 21 judges that a process command including a deposit start command or a process request including the same is not received (step S20: No), the sub control unit 21 advances the process to a step S27.

Then, in the step S21, the sub control unit 21 operates the depositing unit 25 and the transport unit 29 so as to start a process in which money put through the inlet 5 is transported to the recognition unit 28. Then, the sub control unit 21 advances the process to a step 22. The operation of the depositing unit 25 that is started at this time finishes at a time point when all the money put through the inlet 5 are sent to the transport unit 29, and the operation of the transport unit 29 finishes at a time point when all the deposited money are stored or returned.

Then, in the step S22, the sub control unit 21 judges and recognizes a fitness and a denomination of the deposited money, and counts the number of the money for each denomination and a total sum thereof, based on a money recognition result of the recognition unit 28. After that, the sub control unit 21 advances the process to a step S23.

Then, in the step S23, the sub control unit 21 judges whether there is second currency among the money that have been subjected to the recognition and judgment process in the step S22 or not. When the sub control unit 21 judges that there is no second currency (step S23: No), the sub control unit 21 advances the process to a step S24. Then, the sub control unit 21 causes all the deposited money to be stored in the storing units for each denomination 22 to 24, and then advances the process to a step S29.

The transport of the money from the recognition unit 28 to the storing units for each denomination 22 to 24 is also performed by the transport unit 29.

On the other hand, in the step S23, when the sub control unit 21 judges that there is second currency among the money that have been subjected to the recognition and judgment process in the step S22 (step S23: Yes), the sub control unit 23 operates the transport unit 29 and the returning unit 27 so as to return the second currency through the return slot 7 (step S25). At the same time, the sub control unit 21 causes the first currency to be stored in the storing units for each denomination 22 to 24, and then advances the process to a step S26.

The transport of the money from the recognition unit 28 to the storing units for each denomination 22 to 24 and the transport of the money from the recognition unit 28 to the return slot 7 are performed by the transport unit 29.

Then, in the step S26, the sub control unit 21 transmits, as a return report, the number of the second currency for each denomination, which has been returned in the step S25, and a total sum thereof, to the first terminal 3. Then, the sub control unit 21 finishes the process.

In the step S27, the sub control unit 21 judges whether a process command including a dispense start command or a process request including the same from the first terminal 3 has been received. When the sub control unit 21 judges that a process request including a dispense start command has been received (step S27: Yes), the sub control unit 21 advances the process to a step S28. Meanwhile, when the sub control unit 21 judges that a dispense start command is not received (step S27: No), the sub control unit 21 finishes the process.

In the step S28, the sub control unit 21 performs the dispensing process, and thereafter finishes the process. In the dispensing process, the sub control unit 21 operates the transport unit 29 and the dispensing unit 26 so as to perform a process in which money whose number corresponds to the dispense sum included in the dispense start command is transported for each denomination from the storing units for each denomination 22 to 24 to the outlet 6.

In the step S29, the sub control unit 21 transmits a deposit/dispense report to the first terminal 3, and finishes the process. The deposit/dispense report transmitted at this time includes, when the money is stored, the number of the stored money for each denomination and a total sum thereof. In addition, when the money stored at this time is the first currency that was returned from the second depositing and dispensing machine 102, the sub control unit 29 transmits, to the first terminal 3, a deposit report including valuable media information including the number of the money for each denomination and a total sum thereof.

In addition, when money incapable of being handled was mixed in the received money, the deposit/dispense report to be transmitted to the first terminal includes the number of the stored money for each denomination and a total sum thereof, excluding the returned money. In addition, when money was dispensed, the deposit/dispense report to be transmitted to the first terminal includes the number of the dispensed money for each denomination and a total sum thereof.

In the valuable media management system S in this embodiment, since the main control unit 12 of the first terminal 3 and the sub control unit 21 of the first depositing and dispensing machine 2 perform the above-described respective processes, a person in charge can perform the depositing process and the dispensing process by means of the first system 1 and the second system 100 only by operating the displaying and operating unit 11 of the first terminal 3. Thus, a burden of the person in charge who performs the depositing and the dispensing operations.

Further, the first terminal 3 can causes the inside RAM to record valuable media information about second currency that was recognized to be incapable of being handled and returned from the first depositing and dispensing machine 2. In addition, when the first terminal 3 receives valuable media information about the second currency that was returned from the first depositing and dispensing machine 2 from the second depositing and dispensing machine 102 that has succeedingly stored the returned second currency via the second terminal, the first terminal 3 can check up the received valuable media information with the valuable media information recorded in the inside RAM, and records and manages the check-up result. Thus, it is possible to follow up whether the returned second currency is stored in the second depositing and dispensing machine 102.

In the aforementioned embodiment, the first depositing and dispensing machine 2 capable of handling first currency and the second depositing and dispensing machine 102 capable of handling second currency are taken as an example of a combination of valuable media handling machines having different valuable media processing functions. However, the combination of valuable media handling machines having different valuable media processing functions is not limited thereto, a combination of valuable media handling machines for handling other valuable media is possible.

For example, the present invention can be applied to any of the combinations including a combination of a valuable media handling machine capable of handling only large denomination notes and a valuable media handling machine capable of handling only small denomination notes, a combination of a valuable media handling machine capable of handling only cash and a valuable media handling machine capable of handling only valuable media other than cash (e.g., coupons and various checks), and a combination of a valuable media handling machine capable of handling only fit notes and a valuable media handling machine capable of handling only unfit notes.

In addition, in this embodiment, although the valuable media management system including the two valuable media handling apparatuses, i.e., the first system 1 and the second system 100, the number of the valuable media handling apparatuses is not limited thereto. As long as the number thereof is two or more, the number thereof is optional.

In addition, the present invention can be applied to a valuable media management system including a plurality of valuable media management apparatuses, in which at least one of a plurality of valuable media handling machines has a valuable media processing function that is different from those of other valuable media handling machines.

Even when the present invention is applied to such a valuable media management system, by operating one control unit, other valuable media handling machines having different valuable-media processing functions can be operated. Thus, even when there are provided a plurality of valuable media management apparatuses having different processing functions, the present invention can provide a valuable media management system capable of restraining a burden of a person in charge.

The aforementioned various information processing programs are not necessarily recorded in the ROM from the first. The respective information processing programs may be recorded in: a "movable physical medium" such as a flexible disc (FD), a CD-ROM, an MO disc, a DVD disc, a magnetoptical disc, or an IC card, which can be inserted to respective terminals and the respective deposit and dispense apparatuses; a "stationary physical medium" such as a hard disc drive (HDD) which can be installed inside or outside the respective terminals and the respective deposit and dispense apparatuses; or "another computer (or a server)" connected to the respective terminals and the respective deposit and dispense apparatuses through a public circuit, an internet, a LAN or a WAN. The respective information processing programs recorded in such media or computer may be read by the computer and executed.

Out of the respective processes described in this embodiment, a part of or all of the processes which are described as the automatic processes may be manually performed. Alternatively, a part of or all of the processes which are described as the manual processes may be automatically performed by a known method. Moreover, unless otherwise specified, the process procedure, the control procedure, the concrete names, and the information including various data and parameters, may be optionally changed.

Further, the illustrated respective constituent elements of the apparatuses are functional and conceptual, and it is not necessary that the constituent elements are physically structured as the illustration. Namely, the concrete form of dispersion and integration of the respective apparatuses is not limited to the illustrated examples, but all or one of the apparatuses can be functionally or physically dispersed and integrated at optional unit in accordance with various loads and used conditions. Furthermore, all or an optional part of the respective process functions performed in the respective apparatuses may be realized by a CPU and an information processing program that is analyzed and executed by the CPU, or may be realized as a hardware by a wired logic.

## Claims

1. A valuable media management system comprising a plurality of valuable media management apparatuses each including: a valuable media handling machine configured to process valuable media; and a control unit that corresponds to the valuable media handling machine, the control unit having an operation unit configured to be operated for working the valuable media handling machine;
wherein:
at least one valuable media handling machine among the plurality of valuable media handling machines has a processing function of valuable media that is different from those of the other valuable media handling machines; and
each of the control unit has a corresponding machine control function for working the valuable media handling machine that corresponds to the own unit, as well as a non-corresponding machine control function for working another valuable media handling machine other than the valuable media handling machine that corresponds to the own unit, and one of the corresponding machine control function and the non-corresponding machine control function can be selected by operating the operation unit.

2. The valuable media management system according to claim 1, wherein:
when the corresponding machine control function is selected by the operation unit, the control unit transmits a process command to the valuable media handling machine that corresponds to the own unit, such that valuable media are processed by the valuable media handling machine that corresponds to the own unit; and
when the non-corresponding machine control function is selected by the operation unit, the control unit transmits a process request to another control unit, such that valuable media are processed by the valuable media handling machine that corresponds to said other control unit.

3. The valuable media management system according to claim 2, wherein
when the control unit receives the process request transmitted from another control unit, the control unit allows the valuable media handling machine that corresponds to the own unit to be worked by said other control unit that has transmitted the process request.

4. The valuable media management system according to claim 1, wherein
the respective valuable media handling machines have processing functions for handling different specific kinds of valuable media.

5. The valuable media management system according to claim 1, wherein
the valuable media handling machine includes:
a valuable media receiving unit configured to receive valuable media;
a recognition unit configured to recognize the valuable media received by the valuable media receiving unit; and
a storing unit configured to store the valuable media recognized by the recognition unit.

6. The valuable media management system according to claim 5, wherein
each of the valuable media handling machine includes a returning unit configured to, when some valuable medium is judged as valuable medium of a type incapable of being handled based on a recognition result by the recognition unit, return this valuable medium.

7. The valuable media management system according to claim 6, wherein
the control unit further includes an informing unit configured to inform of another valuable media handling machine capable of handling the valuable media to be returned from the valuable media handling machine that corresponds to the own unit.

8. The valuable media management system according to claim 6, wherein
the control unit includes a check-up unit configured to check up valuable media information about the valuable media judged to be incapable of being handled based on the recognition result by the recognition unit and then returned, with valuable media information about valuable media that were returned by the returning unit and then stored in the other valuable media handling machine.

9. The valuable media management system according to claim 8, wherein
the valuable media information is information including an amount and a type of the valuable media received by the valuable media receiving unit.

10. The valuable media management system according to claim 8, wherein
the valuable media information is information including a total sum or total value of the valuable media received by the valuable media receiving unit.

11. A valuable media management method comprising:
controlling a corresponding machine, by means of a control unit that corresponds to a valuable media handling machine configured to process valuable media and controls a behavior of the valuable media handling machine, to process valuable media by the valuable media handling machine that corresponds to the control unit;
controlling a non-corresponding machine, by means of the control unit, to process valuable media by another valuable media handling machine having a valuable media processing function that is different from that of the initial valuable media handling machine; and
selecting one of the controlling of a corresponding machine and the controlling of a non-corresponding machine by operating an operation unit of the control unit.
